# EUROPÄISCHE PATENTSCHRIFT

(11) **EP 1 925 920 B1**
(45) Veröffentlichungstag und Bekanntmachung des Hinweises auf die Patenterteilung: **16.11.2011**
(21) Anmeldenummer: 07119194.4
(22) Anmeldetag: 24.10.2007
(51) Int. Cl.: G01G 7/02, G01G 21/24, G01G 21/23

(54) **Wägezelle**
Weighing cell
Cellule de pesage

(30) Priorität: 24.11.2006 EP 06124719
(43) Veröffentlichungstag der Anmeldung: 28.05.2008
(73) Patentinhaber: Mettler-Toledo AG, 8606 Greifensee (CH)
(72) Erfinder: Burkhard, Hans-Rudolf, 8492, Wila (CH); Bendler, Markus, 8617, Mönchaltdorf (CH)

(56) Entgegenhaltungen:
- EP-A- 1 701 144
- CH-A5- 593 481
- US-A- 4 802 541

## Beschreibung

Die Erfindung bezieht sich auf ein elektromagnetisches Kraftkompensations-Direktmesssystem mit einem Lastaufnehmer und einer Kraftkompensationsvorrichtung, welche eine Spule und einen Permanentmagneten aufweist.

Ein elektromagnetisches Kraftkompensations-Direktmesssystem, im Folgenden als Direktmesssystem bezeichnet, zeichnet sich dadurch aus, dass der Lastaufnehmer über ein Kraftübertragungsgestänge direkt mit der Kraftkompensationsvorrichtung verbunden ist.

Bei der elektromagnetischen Kraftkompensation wird die Kraft, die durch eine Last auf der Waagschale bzw. dem Lastaufnehmer verursacht wird, durch eine Kraftkompensationsvorrichtung, die aus mindestens einem Permanentmagneten und einer Spule besteht, kompensiert, wobei der durch die Spule fliessende Strom zur Erzeugung der Kompensationskraft gemessen wird. Dieser Messwert ist proportional zur aufgelegten Last. Dieser Messwert ist aber auch abhängig von der Position der Spule im Magnetfeld des Permanentmagneten und deshalb muss die Spule beim Erfassen des Messwertes stets dieselbe Position gegenüber dem Magneten aufweisen. Die Position der Spule nach Aufbringen der Last wird über einen Lagegeber ermittelt und der Strom an der Spule solange erhöht, bis die von der Last verursachte Verschiebung der Spule gegenüber dem Permanentmagneten kompensiert ist. Dabei erfolgt die Messung des Spulenstroms, welcher ein Mass für das Gewicht der aufgelegten Last darstellt.

Eine solche Kraftkompensationswaage wird z.B. in der US 4 802 541 offenbart.

Ein Direktmesssystem wird in der CH 593 481 A5 offenbart. In dieser Patentschrift ist der Lastaufnehmer über ein Kraftübertragungsgestänge direkt mit der Kraftkompensationsvorrichtung gekoppelt. Am Kraftübertragungsgestänge ist die bewegliche Seite des Lagegebers angebracht, während die feststehende Seite des Lagegebers mit dem gehäusefesten Bereich der Wägezelle, beziehungsweise mit dem feststehenden Bereich der Kraftkompensationsvorrichtung, starr verbunden ist.

Dieses Direktmesssystem wird vorzugsweise im Niederlastbereich eingesetzt. Die Präzision der Messung hängt im Wesentlichen von der Auflösung und der Anordnung des Lagegebers im Direktmesssystem ab. Der Lastaufnehmer sowie die Spule der Kraftkompensationsvorrichtung müssen gegenüber dem feststehenden Bereich der Wägezelle präzise geführt werden. Dies geschieht über eine Parallelführung, deren beweglicher Parallelschenkel mit dem Kraftübertragungsgestänge verbunden ist und deren feststehender Parallelschenkel mit dem gehäusefesten Bereich der Wägezelle starr verbunden ist. Der bewegliche Parallelschenkel und der feststehende Parallelschenkel sind durch zwei biegesteife Parallellenker mittels Dünnstellenbiegelager miteinander verbunden. Es können jedoch auch federnde Parallellenker eingesetzt werden, dann entfallen die Dünnstellenbiegelager. Beim Auflegen einer Last auf den Lastaufnehmer verschiebt sich das Kraftübertragungsgestänge in Lastrichtung, was eine Auslenkung der Parallellenker zur Folge hat und die Dünstellenbiegelager oder elastischen Parallellenker biegt.

Die Parallelführung weist auf Grund ihrer Federkonstante in der Regel eine Rückstellkraft auf, welche ebenso wie eine auf den Lastaufnehmer aufgelegte Last eine Verschiebung der Spule bewirkt und ebenfalls kompensiert werden sollte.

In der Regel ist die Spule der Kraftkompensationsvorrichtung über dünne Drähte elektrisch mit einem regelbaren Stromkreis verbunden. Nachteilig an dieser Ausführung ist es, dass die Drähte neben der elektrischen Verbindung auch eine mechanische Verbindung vom feststehenden zum beweglichen Teil der Wägezelle herstellen. Dadurch wird eine zusätzliche Federkonstante in das Direktmesssystem eingebracht, welche auf die Parallelführung einwirkt und das Messergebnis verfälschen kann. Die Drähte werden in der Regel angelötet und sind besonders dünn und filigran ausgestaltet, um die zusätzlich auftretende Federkonstante möglichst klein zu halten. Die filigranen Drähte sind jedoch schwierig zu befestigen und es kann leicht passieren, dass sich einer der Drähte löst und so die Funktionsfähigkeit der Waage nicht mehr gegeben ist.

Die Federkonstante, welche durch die mechanische Verbindung des beweglichen und des feststehenden Bereichs der Wägezelle über den Spulenstromkreis entsteht, beeinflusst vor allem die Ergebnisse von Wägezellen für den Niederlastbereich und/oder bei einer hohen Auflösung das Wägeergebnis, da dann selbst geringste Änderungen der Federkonstanten ausreichen, um eine Änderung des Messergebnisses zu verursachen.

Weiterhin hat sich vor allem bei kompakten Wägemodulen mit Direktmesssystemen für Mehrfachwägevorrichtungen, wie sie beispielsweise in der EP 1726926 A1 offenbart werden, gezeigt, dass aufgrund einer unterschiedlichen thermische Ausdehnung der mit dem Lagegeber verbundenen Teile der Parallelführung und/oder des Kraftübertragungsgestänges die Nullpunktsdrift eines Direktmesssystems negativ beeinflusst wird.

Die Aufgabe der Erfindung liegt somit darin, die Übertragung elektrischer Signale in einem Direktmesssystem, insbesondere zur Gewährleistung der Stromversorgung der Spule, ohne Aufbringung einer zusätzlichen Federkonstante zu gewährleisten. Weiterhin soll ein Direktmesssystem mit einer möglichst geringen Nullpunktsdrift geschaffen werden.

Ein elektromagnetisches Kraftkompensations-Direktmesssystem, im Folgenden als Direktmesssystem bezeichnet, weist eine mehrteilige Parallelführung, und einen Lastaufnehmer auf, welcher über ein Kraftübertragungsgestänge mit einer Kraftkompensationsvorrichtung verbunden ist. Die Kraftkompensationsvorrichtung weist mindestens einen Permanentmagneten und eine elektrisch mit einem regelbaren Stromkreis verbundene Spule auf. Mindestens ein Teil der Parallelführung ist zur Übertragung elektrischer Signale ausgestaltet.

Die Begriffe "mehrteilige Parallelführung" und "Teil der Parallelführung" werden hier sowohl im Sinne von einer Parallelführung, welche aus mehreren Bauteilen besteht, als auch als Parallelführung mit mehreren funktionellen Bereichen bzw. Wirkteilen verwendet.

Durch die Übertragung von elektrischen Signalen über mindestens einen Teil der Parallelführung ist es möglich, diese Signale ohne eine zusätzliche mechanische Verbindung zwischen dem feststehenden und dem beweglichen Bereich der Wägezelle herzustellen, wodurch beispielsweise die Messgenauigkeit, die Nulllast, insbesondere deren Stabilität, und auch die Reproduzierbarkeit der Wägezelle verbessert werden kann.

Vorzugsweise ist der Teil der Parallelführung elektrisch in den regelbaren Stromkreises eingebunden und dient zur Übertragung von elektrischen Strömen.

Die Einbindung des Teils der Parallelführung in den regelbaren Stromkreis ist besonders vorteilhaft, da so die Stromversorgung der Spule gewährleistet werden kann, ohne dass eine zusätzliche mechanische Verbindung zwischen dem feststehenden und dem beweglichen Bereich der Wägezelle hergestellt wird.

Neben elektrischen Strömen können die übertragenen elektrischen Signale auch analoge und/oder digitale Mess- und/oder Regelsignale sein, welche zwischen mindestens einem in und/oder am Direktmesssystem angeordneten Sensor und einer Mess- und/oder Regeleinheit ausgetauscht werden. Es bietet sich an, die elektrischen Ströme und die Mess- und/oder Regelsignale über dieselben und/oder im Wesentlichen parallel zueinander angeordneten Leiterbahnen zu leiten.

Ein derartiger Sensor kann beispielsweise als Temperatur-, Wärmefluss-, Druck-, Feuchtigkeits-, Strahlungs- oder Beschleunigungssensor oder zur Messung anderer physikalischer oder chemischer Grössen ausgestaltet sein. Mit diesen Sensoren können Parameter überprüft werden, welche beispielsweise die Leistungsfähigkeit des Direktmesssystems und insbesondere das Wägeergebnis beeinflussen, wie die Temperatur innerhalb des Direktmesssystems. Stellt ein Direktmesssystem beispielsweise einen Teil eines analytischen, thermo-analytischen oder thermogravimetrischen Messgeräts dar, so können auch Parameter bestimmt werden, welche für das Messprinzip dieses Geräts relevant sind. Solche Parameter können beispielsweise die Temperatur oder Temperaturänderungen einer auf dem Lastaufnehmer aufgebrachten Probe oder der Wärmefluss durch diese Probe sein.

Im Folgenden wird im Wesentlichen der Aufbau von Direktmesssystemen beschrieben, bei der mindestens ein Teil der Parallelführung zur Übertragung von elektrischen Strömen ausgestaltet und in den regelbaren Stromkreis der Spule eingebunden ist. Zusätzlich zu den elektrischen Stromsignalen können auch die Mess- und/oder Regelsignale eines erfindungsgemässen Mess- und/oder Regelkreises über mindestens einen Teil der Parallelführung geleitet werden, wobei diese über dieselben und/oder weitere Leitungen geleitet werden.

Das Teil der Parallelführung kann beispielsweise teilweise und/oder vollständig aus einem elektrisch leitenden Material bestehen und durch geeignete Kontaktierung direkt elektrisch in den Spulenstromkreises eingebunden werden, wobei die Kontaktstelle selbst elektrisch isoliert sein sollte, um ungewünschte elektrische Effekte zu vermeiden.

Weiterhin kann mindestens eine Oberfläche des Teils der Parallelführung teilweise und/oder vollständig mit einer elektrisch leitenden Schicht bedeckt sein. Bei einer teilweisen Bedeckung bietet es sich beispielsweise an, die elektrisch leitende Schicht in Form eines eine oder mehrere elektrische Leiterbahnen bildenden Musters aufzubringen.

Weist ein Teil der Parallelführung mehrere elektrische Leiterbahnen auf, so sollten diese voneinander isoliert sein.

Das Teil der Parallelführung kann auch mehrschichtig aufgebaut sein, beispielsweise in Form von einer oder mehrerer auf einem leitenden Kern aufgebrachten isolierenden Schichten oder in Form von einer oder mehrerer auf einem isolierenden Kern aufgebrachten leitenden Schichten.

In einem bevorzugten Ausführungsbeispiel weist ein Teil der Parallelführung mindestens zwei voneinander isolierte Leiterbahnen auf und ist so zur Übertragung elektrischer Signale ausgestaltet. Dieser Teil der Parallelführung kann mit dem regelbaren Stromkreis und/oder dem Mess- und/oder Regelkreis verbunden werden. Eine derartige Ausgestaltung ist insbesondere bei einer komplexen Parallelführung vorteilhaft.

Ein erfindungsgemässes Direktmesssystem kann unterschiedlich ausgebildete Parallelführungen aufweisen. Zum Beispiel kann die Parallelführung einen beweglichen Parallelschenkel und einen feststehende Parallelschenkel aufweisen, welche durch biegesteife Parallellenker mittels Dünnstellenbiegelager verbunden sind.

Vorteilhafterweise ist der Teil der Parallelführung ein Parallelschenkel und/oder ein Parallellenker.

In einem weiteren Ausführungsbeispiel weist die Parallelführung mindestens zwei Parallelführungsglieder auf. Diese können beispielsweise federnde, membranartige Parallelführungsglieder sein, in denen durch geeignete Durchbrechungen sowohl ein feststehender Parallelschenkel als auch ein beweglicher Parallelschenkel ausgebildet sind, welche über mindestens einen Parallellenker verbunden sind. Derartige Parallelführungsglieder sind unter anderen in der EP 1726926 A1 offenbart. Hier können das Parallelführungsglied oder mindestens ein darin ausgebildeter Parallellenker und/oder mindestens ein darin ausgebildeter Parallelschenkel zur Übertragung elektrischer Signale dienen und vorzugsweise in den Stromkreis und/oder den Mess- und/oder Regelkreis eingebunden werden.

Zur Bestimmung der Position der Spule nach Aufbringen der Last weist das Direktmesssystem einen Lagegeber auf. Die Position des Lagegebers kann mit einer geeigneten Abtastung ermittelt werden. Als Lagegeber kann beispielsweise ein Spalt verwendet werden, welcher am Kraftübertragungsgestänge angeordnet ist. Es sind verschiedene Abtastungen zur Kontrolle der Position des Lagegebers bekannt, wobei eine optische Abtastung bevorzugt wird.

In einem weiteren Ausführungsbeispiel weist das Direktmesssystem eine Parallelführung auf, welche ein oberes und ein unteres Parallelführungsglied umfasst, und sich dadurch auszeichnet, dass der Lagegeber im Wesentlichen mittig zwischen dem oberen und dem unteren Parallelführungsglied angeordnet ist.

Diese Anordnung ist vorteilhaft, da hier die thermische Ausdehnung der mit dem Lagegeber verbundenen Teile des Kraftübertragungsgestänges sowie die des oberen und des unteren Parallelführungsglieds im Wesentlichen gleich sind und die Nullpunktsdrift des Direktmesssystems kaum beeinflussen.

Das untere und das obere Parallelführungsglied können insbesondere zwischen Lastaufnehmer und der Kraftkompensationsvorrichtung angeordnet sein.

Die Position des Lagegebers kann mittels der Abtastung bestimmt werden, welche ebenfalls im Wesentlichen mittig zwischen dem oberen und dem unteren Parallelführungsglied angeordnet ist.

Die Figuren zeigen verschiedene Ausführungsformen eines erfindungsgemässen Direktmesssystems.
- Fig. 1: Direktmesssystem im Schnitt mit einem Lastaufnehmer, einem Kraftübertragungsgestänge, einer Parallelführung und einer Kraftkompensationsvorrichtung, welche eine Spule aufweist, die über mindestens ein Teil der Parallelführung an einen regelbaren Stromkreis angeschlossen ist;
- Fig. 2: Darstellung der Kraftkompensationsvorrichtung und der Parallelführung des Direktmesssystems aus Figur 1 im Schnitt;
- Fig. 3: Aufsicht auf ein Parallelführungsglied mit zwei elektrischen Leiterbahnen,
- Fig. 4: Darstellung eines Parallelführungsglieds mit zwei leitenden Schichten im Schnitt in einer Aufsicht,
- Fig. 5: eine perspektivische Darstellung eines Direktmesssystems mit einer Parallelführung mit zwei oberen und zwei unteren Parallellenkern,
- Fig. 6: Direktmesssystem im Schnitt mit einem Lastaufnehmer, einem Kraftübertragungsgestänge, einer Parallelführung, einer Kraftkompensationsvorrichtung, welche eine Spule aufweist, die über mindestens ein Teil der Parallelführung an einen regelbaren Stromkreis angeschlossen ist, und mindestens einen Sensor, welcher über mindestens ein Teil der Parallelführung an einen Mess- und/oder Regelkreis angeschlossen ist.

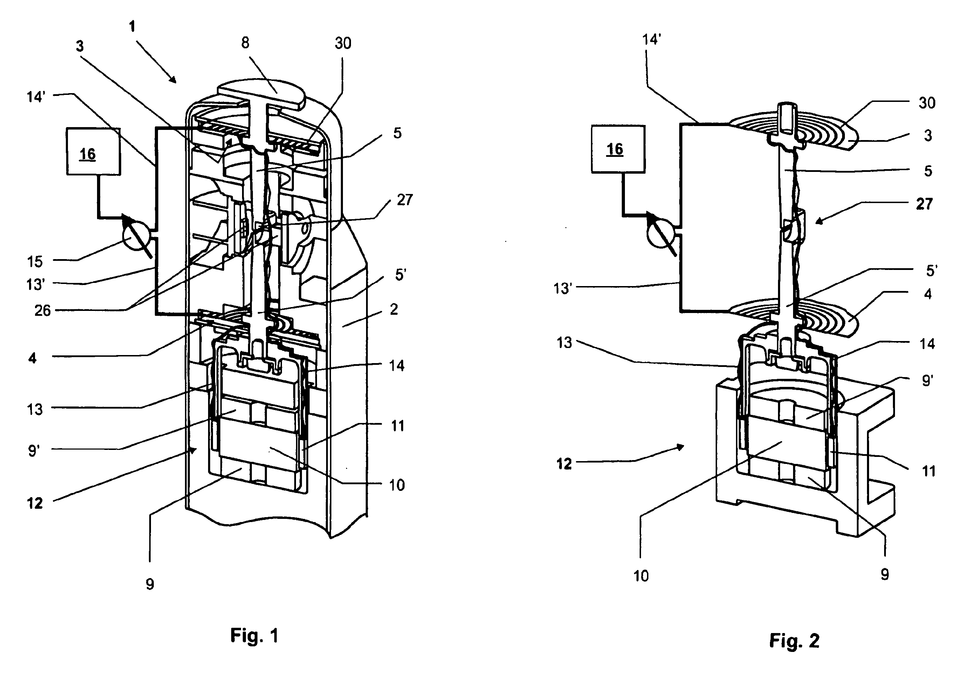

Figur 1 zeigt ein Direktmesssystem 1 im Schnitt mit einem Gehäuse 2. Figur 2 ist eine Teilansicht der Figur 1 ohne das Gehäuse. Die Figuren 1 und 2 werden im Folgenden im Wesentlichen gemeinsam beschrieben, wobei gleiche Merkmale mit denselben Bezugszeichen versehen sind.

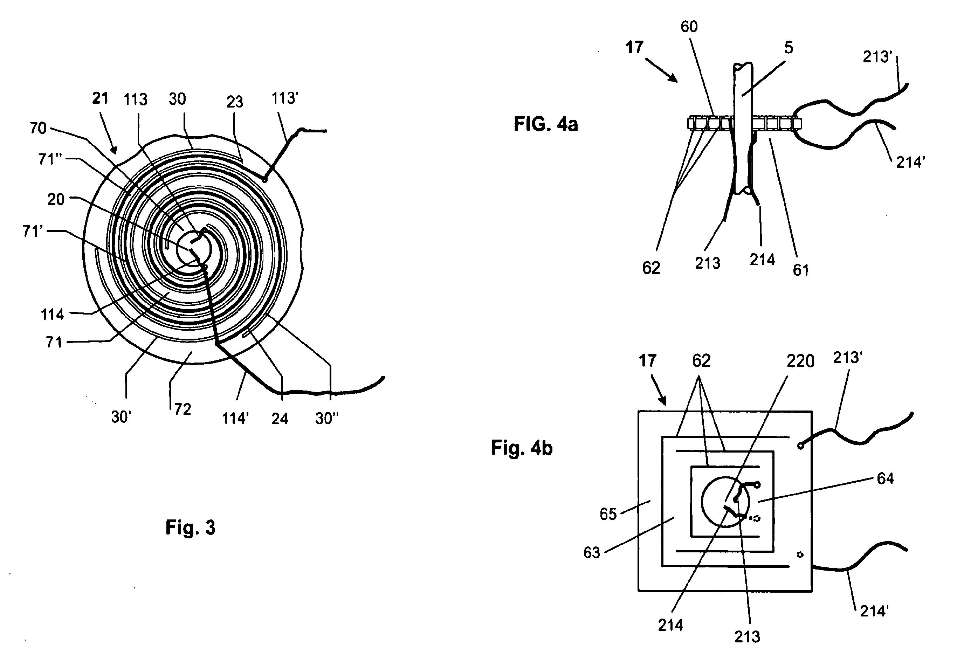

Das Direktmesssystem 1 weist einen Lastaufnehmer 8 auf, welcher über ein Kraftübertragungsgestänge 5, 5' und einen Lagegeber 27 mit einer Kraftkompensationsvorrichtung 12 verbunden ist. Der Lastaufnehmer 8 sowie eine Spule 11 der Kraftkompensationsvorrichtung 12 werden gegenüber einem gehäusefesten Bereich 2 des Direktmesssystems 1 präzise geführt. Dies geschieht über eine Parallelführung, welche zwei Parallelführungsglieder 3, 4 umfasst, deren Aufbau anhand der Figuren 3 und 4 näher erläutert wird. Am Kraftübertragungsgestänge 5, 5' sind die beweglichen Parallelschenkel der beiden Parallelführungsglieder 3, 4 angebracht, während die feststehenden Parallelschenkel mit dem feststehenden Bereich der Kraftkompensationsvorrichtung 12 starr verbunden sind.

Der Lagegeber 27 ist im Wesentlichen mittig zwischen den Parallelführungsgliedern 3, 4 am Kraftübertragungsgestänge 5, 5' angeordnet. Der Lagegeber 27 ist hier als einfacher Spalt zwischen dem mit einem Lastaufnehmer 8 verbundenen Teil des Kraftübertragsgestänges 5 und dem mit der Kraftkompensationsvorrichtung 12 verbundenen Teil des Kraftübertragsgestänges 5' ausgebildet.

Die Position des Lagegebers 27, genauer die des Spalts, wird optisch mittels einer feststehenden Abtastung 26 ermittelt. Die Abtastung 26 ist ebenfalls im Wesentlichen mittig zwischen den Parallelführungsgliedern 3, 4 angeordnet. Wirkt beispielsweise eine Kraft auf den Lastaufnehmer 8 ein, so bewegt sich das Kraftübertragungsgestänge 5, 5' in Lastrichtung und die Position des Lagegebers 27 wird in Relation zur Abtastung 26 verändert. Durch eine Veränderung des durch die Kraftkompensationsvorrichtung 12 fliessenden Kompensationsstroms, wird die Krafteinwirkung der Last kompensiert und der Lagegeber 27 wieder in seine ursprüngliche Position gebracht. Der Kompensationsstrom ist ein Mass für das Gewicht der aufgebrachten Last.

Die Kraftkompensationsvorrichtung 12 besteht aus zwei Permanentmagneten 9, 9', zwischen denen ein Polschuh 10 angeordnet ist. Der Polschuh 10 wird von einer Spule 11 umgeben, die hier nur schematisch dargestellt ist. Die Spule 11 ist über zwei elektrische Leitungen an einen regelbaren Stromkreis angeschlossen, wie er durch die Stromquelle 15 angedeutet wird. Die erste Leitung weist einen direkt mit der Spule 11 verbundenen Leitungsteil 13, das untere Parallelführungsglied 4 sowie einen Leitungsteil 13' auf, welcher das Parallelführungsglied 4 mit der Stromquelle 15 verbindet. Die zweite Leitung weist einen mit der Spule 11 verbundenen Leitungsteil 14, das obere Parallelführungselement 3 sowie den Leitungsteil 14' auf. Zumindest die Befestigungsbereiche der Leitungen bzw. der Leitungsteile an den Parallelführungsgliedern 3, 4 sind elektrisch isoliert. Der über den Stromkreis 15 in die Spule 11 geleitete Kompensationsstrom wird durch eine geeignete Steuer- und/oder Regeleinheit 16 geregelt.

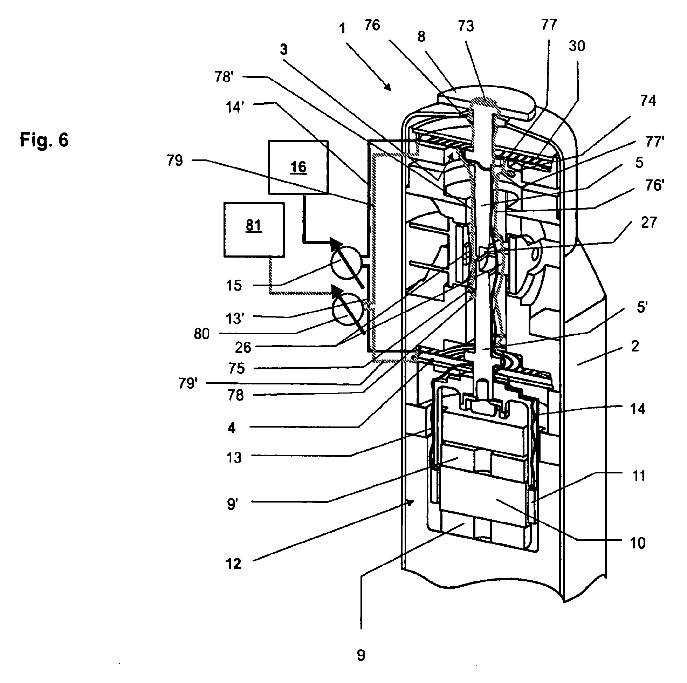

Die Parallelführungsglieder 3,4 bestehen in diesem Ausführungsbeispiel aus einem elektrisch leitenden Material, so dass sie direkt in den Stromkreis oder einen hier nicht gezeigten Mess- und/oder Regelkreis (s. a. Figur 6) eingebunden werden können. Auf diese Weise wird der Spulenstrom über die beiden Parallelführungsglieder 3, 4 geführt, ohne eine zusätzliche mechanische Verbindung zwischen dem feststehenden und dem beweglichen Bereich der Wägezelle herzustellen.

Figur 3 zeigt eine Aufsicht auf ein Parallelführungsglied 21 mit zwei elektrischen Leiterbahnen 23, 24. Das Parallelführungsglied 21 weist hier drei spiralförmige Durchbrechungen 30, 30', 30" auf, durch die ein mit dem Kraftübertragungsgestänge verbindbarer beweglicher Parallelschenkel 70, ein mit dem Gehäuse verbindbarer feststehender Parallelschenkel 72 sowie drei den feststehenden und den beweglichen Parallelschenkel verbindende Parallellenker 71, 71', 71" ausgebildet werden. Das Kraftübertragungsgestänge wird, wie in Figur 1 und 2 gezeigt, in der Durchführung 20 des Parallelführungsglieds 21 geführt.

Zwei Parallellenker 71', 71" sind mit elektrischen Leiterbahnen 23, 24 versehen, welche der Form der Parallellenker 71', 71" folgen. Die Leiterbahnen 23, 24 sind durch die Durchbrüche 30 elektrisch von einander isoliert. Verfahren zur Erzeugung derartiger Leiterbahnen 23, 24 auf einer Oberfläche des Parallelführungsglieds 21 sind bekannt und werden hier nicht näher ausgeführt. Beispielsweise besteht das Parallelführungsglied 21 aus einem elektrischen Isolator, auf den zur Ausbildung von Leiterbahnen ein elektrisch leitendes Material aufgebracht werden kann.

Jeweils eine der beiden Leiterbahnen 23, 24 ist elektrisch in die erste oder die zweite Leitung eingebunden. Die Kraftkompensationsvorrichtung mit der Spule ist beispielsweise wie in den Figuren 1 und 2 gezeigt unterhalb der Parallelführungsglieder angeordnet. Die Spule und die auf dem hier gezeigten Parallelführungsglied 21 ausgebildeten Leiterbahnen 23, 24 sind über die Leitungsteile 113, 114 verbunden. Auf der anderen Seite sind die Leiterbahnen 23, 24 über geeignete Leitungsteile 113', 114' mit einer hier nicht gezeigten Stromquelle sowie einer Steuer- und/oder Regeleinheit kontaktiert. Ein derartig ausgestaltetes Parallelführungsglied 21 kann als oberes und/oder unteres Parallelführungsglied in das in Figur 1 und 2 gezeigte Direktmesssystem eingesetzt werden.

Da sowohl die Stromzufuhr als auch die Stromableitung der Spule mittels des Parallelführungsglieds 21 möglich ist, wird in der Regel nur ein Parallelführungsglied 21 in den regelbaren Stromkreis der Spule integriert.

Ein alternatives Parallelführungsglied 17 mit zwei leitenden Schichten 60, 61 ist in Figur 4a im Schnitt und Figur 4b in einer Aufsicht gezeigt. Das Parallelführungsglied 17 weist U-förmige Durchbrechungen 62 auf sowie eine mittige Durchführung 220 für das Kraftübertragungsgestänge 5. Mittels der U-förmigen Unterbrechungen 62 sind in sich gefaltete Parallellenker 63 ausgebildet. Diese verbinden den in der Mitte des Parallelführungsglieds 17 angeordneten beweglichen Parallelschenkel 64 mit dem feststehenden Parallelschenkel 65, wobei der feststehende Parallelschenkel 65 in Form eines geschlossenen Rahmens die Parallellenker 63 und den beweglichen Parallelschenkel 64 umschliesst. Der Randbereich des feststehenden Parallelschenkels 65 kann mit geeigneten Befestigungsmitteln gehäusefest festgelegt werden.

Beide Oberflächen des Parallelführungsglieds 17 sind unter Auslassung eines Randbereichs mit einem elektrisch leitenden Material 60, 61 beschichtet. Eine Schicht 60 stellt über die Leitungsteile 213, 213' und die andere Schicht 61 über die Leitungsteile 214, 214' jeweils eine elektrische Verbindung zwischen der Spule und dem regelbaren Stromkreis her, welche hier beide nicht gezeigt sind. Die Stromzufuhr zur Spule erfolgt somit beispielsweise über die der Spule zugewandte Oberfläche des Parallelführungsgliedsl7 und die Stromableitung über die der Spule abgewandten Oberfläche, so dass es für eine Direktmesssystem mit mehreren Parallelführungsgliedern genügt, ein Parallelführungsglied elektrisch in den regelbaren Stromkreis einzubinden. Ebenso ist es möglich, nur eine Oberfläche des Parallelführungsglieds zu beschichten und den Spulenstromkreis über beispielsweise zwei baugleiche Parallelführungsglieder anzuschliessen.

Die in den Figuren 3, 4a und 4b gezeigten Parallelführungsglieder können auch mehrere der dargestellten Leiterbahnen aufweisen, so dass neben einem Stromkreis auch mindestens ein Sensor des Direktmesssystems in einen Mess- und/oder Regelkreis eingebunden werden kann. Die Mess- und/oder Regelsignale des Sensors können dabei sowohl durch die gleichen Leitungen oder Leiterbahnen geleitet werden, welche auch im Stromkreis integriert sind, als auch durch weitere Leiterbahnen, welche im Wesentlichen parallel zu denen des Stromkreises angeordnet sind (s. a. Figur 6).

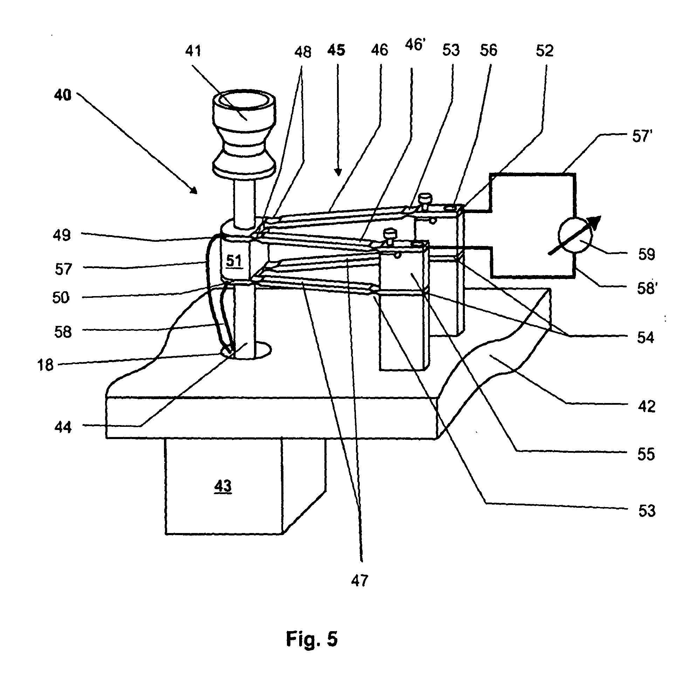

In Figur 5 ist als weiteres Ausführungsbeispiel ein Direktmesssystem 40 mit einem Lastaufnehmer 41 gezeigt. Ein solches Wägemodul 40 kann beispielsweise ein Bestandteil einer Mehrfachwägeanordung sein, in der mehrere Direktmesssysteme in einer vorgegebenen räumlichen Anordnung zueinander angeordnet sind. Das Direktmesssystem 40 ist durch geeignete Befestigungsmittel mit einer Aufnahmestruktur 42 starr verbunden. Die Kraftkompensationsvorrichtung 43 des Wägemoduls 40 weist eine hier nicht dargestellte Spule auf, die mit einem Kraftübertragungsgestänge 44 verbunden ist. Am oberen Ende des Kraftübertragungsgestänges 44 ist der Lastaufnehmer 41 angebracht. Mit dem Kraftübertragungsgestänge 44 ist der bewegliche Parallelschenkel einer Parallelführung 45 verbunden. Diese Parallelführung weist zwei obere Parallellenker 46 und zwei untere Parallellenker 47 auf, die paarweise im Sinne einer V- Anordnung gegen den beweglichen Parallelschenkel der Parallelführung 45 hin zusammenlaufend angeordnet und mit diesem über Dünnstellenbiegelager 48 verbunden sind, wobei der bewegliche Parallelschenkel einen oberen beweglichen Parallelschenkel 49 und einen unteren beweglichen Parallelschenkel 50 beinhaltet, die durch das Distanzstück 51 voneinander getrennt sind.

Der feststehende Bereich der Parallelführung 45 beinhaltet die oberen Fixbereiche 52, die durch Dünnstellenbiegelager 53 mit den oberen Parallellenkern 46 verbunden sind, die unteren Fixbereiche 54, die ebenfalls durch Dünnstellenbiegelager 53 mit den unteren Parallellenkern 47 verbunden sind, und die Zwischenstücken 55, die die oberen Fixbereiche 52 und die unteren Fixbereiche 54 im selben Masse voneinander trennen wie das Distanzstück 51. Der Fixbereich der Parallelführung 45 kann durch Schrauben 56 über die Abstandstücke 55 mit einer weiteren Wägezelle unter Bildung einer Mehrfachwägevorrichtung starr verbunden werden.

Die Stromversorgung der Spule, welche sich in der Wägezelle 43 befindet, erfolgt über zwei Leitungen, die mit einer regelbaren Stromquelle 59 sowie einer hier nicht gezeigten Steuer- und/oder Regeleinheit verbunden sind. Die erste Leitung umfasst hier ein mit der Spule verbundenes Leitungsteil 57 und einen oberen Parallellenker 46 sowie den Leitungsteil 57'. Die zweite Leitung weist einen mit der Spule verbundenen Leitungsteil 58, den zweiten oberen Parallellenker 46' und einen weiteren Leitungsteil 58' auf. Die Leitungsteile 57, 58 können wie hier gezeigt durch eine Durchführung 18 in der Aufnahmestruktur 42 gelegt werden, wobei es auch möglich ist, die Leitungsteile 57, 58, welche die Spule mit einem der Parallelschenkel 49, 50 verbinden, im Inneren des Kraftübertragungsgestänges 44 anzuordnen. Die mit Strom beaufschlagten Parallellenker 46, 47 weisen, wie bereits im Zusammenhang mit den Figuren 1 bis 4 beschrieben, entweder eine elektrisch leitende Beschichtung, ein Muster aus einem elektrisch leitenden Material oder einen elektrisch leitenden Kern auf, welcher nach aussen elektrisch isoliert ist. Ebenso wäre es möglich, dass ein gegenüber der restlichen Parallelführung elektrisch isolierter Parallellenker in den Stromkreis eingebunden ist.

Das in Figur 6 gezeigte Direktmesssystem 1 entspricht im Wesentlichen dem der Figur 1, allerdings weist das hier gezeigte System 1 zusätzlich mindestens einen Sensor 73, 74, 75 auf, welcher über mindestens einen Teil der Parallelführung in einen Mess-und/oder Regelkreis eingebunden ist. In Figur 6 sind beispielhaft drei Sensoren 73, 74, 75 gezeigt, wobei ein erfindungsgemässes Direktmesssystem auch mehr oder weniger Sensoren aufweisen kann, welche an und/oder im Direktmesssystem angeordnet sind.

Die Sensoren 73, 74, 75 können beispielsweise als Temperatur-, Wärmefluss-, Druck-, Feuchtigkeits-, Strahlungs- oder Beschleunigungssensor oder zur Messung andere physikalischer oder chemischer Grössen ausgestaltet sein.

Ein erster Sensor 73 ist am Lastaufnehmer 8 angeordnet. Wenn das Direktmesssystem Teil eines thermoanalytischen Messgeräts ist, so können mittels des ersten Sensors 73 beispielsweise Temperaturänderungen oder der Wärmefluss durch eine auf dem Lastaufnehmer 8 angeordnete Probe ermittelt werden. In diesem Fall sollte der Lastaufnehmer 8 thermisch vom Kraftübertragungsgestänge 5 entkoppelt sein. Der Sensor 73 ist mit zwei Leitungsteilen 76, 76' verbunden, welche den Sensor 73 einerseits über das oberen Parallelführungsglied 3 und andererseits über das unteren Parallelführungsglied 4 in den Mess- und/oder Regelkreis eingebunden (s. a. Figuren 3, 4a und 4b).

Ein zweiter Sensor 74 ist beispielhaft im Inneren des Direktmesssystems 1 unterhalb des oberen Parallelführungsglieds 3 angeordnet und kann je nach Art des eingesetzten Sensors 74 dazu dienen, einen oder mehrere physikalische und/oder chemische Parameter im Inneren des Messsystems 1 zu ermitteln. Der Sensor 74 ist ebenfalls über zwei Leitungsteile 77, 77', das obere Parallelführungsglied 3 und das untere Parallelführungsglied 4 in den Mess- und/oder Regelkreis eingebunden.

Ein dritter Sensor 75 ist ebenfalls im Inneren des Direktmesssystems in der Nähe der Abtastung 26, genauer in der Nähe des Lagegebers 27, angeordnet und über zwei Leitungsteile 78, 78', das obere Parallelführungsglied 3 und das untere Parallelführungsglied 4 in den Mess- und/oder Regelkreis eingebunden.

Damit die im Inneren des Direktmesssystems 1 angeordneten Sensoren 74, 75 den beweglichen und den feststehenden Bereich der Wägezelle nicht mechanisch verbinden, sind diese so im Inneren der Waage angeordnet, dass sie ortsfest in Relation zum beweglichen Teil der Parallelführung und kontaktfrei zum festen Teil der Parallelführung angeordnet sind.

Die Signale der Sensoren 73, 74, 75 werden von den Parallelführungsgliedern 3, 4 über zwei weitere Leitungsteile 79, 79' zu einem Signalumwandler 80 geleitet, welcher mit einer Mess- und/oder Regeleinheit 81 verbunden ist. In Abhängigkeit der Art der verwendeten Sensoren, können diese mit einer gemeinsamen Mess- und/oder Regeleinheit 81 verbunden sein, wie es hier gezeigt ist, oder auch mit getrennten Einheiten.

Die mindestens eine Mess- und/oder Regeleinheit 81 kann sowohl eine zur Steuerung des Direktmesssystems verwendete Einheit sein oder eine davon unabhängige Einheit.

Aufgrund der Aufbaus des Direktmesssystems und der Möglichkeit diese Form von Direktmesssystem in einem mehrere Systeme umfassenden Array anzuordnen, bietet es sich an, mindestens einen Mess- und/oder Regelkreis weitgehend im Inneren des Direktmesssystems anzuordnen und die bereits in den Figuren 1 bis 5 gezeigten Varianten der Stromleitung auch zur Signalübertragung zu nutzen.

Die analogen oder digitalen Signale der Sensoren, sowie auch die Signale zur Ansteuerung der Sensoren und die Stromversorgung der Sensoren können entweder zusammen mit dem Stromkreis der Spule über die gleichen Leiterbahnen geleitet werden oder über im Wesentlichen parallel zu diesen angeordneten Leiterbahnen, wie es beispielhaft in Figur 6 gezeigt ist.

Ebenso wie anhand des in den Figuren 1 und 6 gezeigten Direktmesssystems, kann auch das in Figur 5 gezeigte Direktmesssystem mindestens einen Sensor und mindestens einen mit diesem verbundenen Mess- und/oder Regelkreis aufweisen, in den mindestens ein Teil der Parallelführung eingebunden ist.

### Bezugszeichenliste

| | |
|---|---|
| 1 | Direktmesssystem |
| 2 | Gehäuse |
| 3 | Parallelführungsglied |
| 4 | Parallelführungsglied |
| 5 | Kraftübertragungsgestänge |
| 8 | Lastaufnehmer |
| 9, 9' | Magnet |
| 10 | Polschuh |
| 11 | Spule |
| 12 | Kraftkompensationsvorrichtung |
| 13, 13', 113 | Leitungsteil |
| 113', 213, 213' | Leitungsteil |
| 14, 14', 114 | Leitungsteil |
| 114', 214, 214' | Leitungsteil |
| 15 | regelbare Stromquelle |
| 16 | Steuer- und/oder Regeleinheit |
| 17 | Parallelführungsglied |
| 18 | Durchführung |
| 20, 220 | Durchführung |
| 21 | Parallelführungsglied |
| 23 | elektrisch leitendes Muster / Leiterbahn |
| 24 | elektrisch leitendes Muster / Leiterbahn |
| 26 | Abtastung |
| 27 | Lagegeber |
| 30, 30', 30" | Durchbruch |
| 40 | Direktmesssystem |
| 41 | Lastaufnehmer |
| 42 | Aufnahmestruktur |
| 43 | Kraftkompensationsvorrichtung |
| 44 | Kraftübertragungsgestänge |
| 45 | Parallelführung |
| 46, 46' | oberer Parallellenker |
| 47 | unterer Parallellenker |
| 48 | Dünnstellenbiegelager |
| 49 | oberer beweglicher Parallelschenkel |
| 50 | unterer beweglicher Parallelschenkel |
| 51 | Distanzstück |
| 52 | oberer feststehender Bereich |
| 53 | Dünnstellenbiegelager |
| 54 | unterer feststehender Bereich |
| 55 | Zwischenstück |
| 56 | Schrauben |
| 57, 57' | Leitungsteil |
| 58, 58' | Leitungsteil |
| 59 | regelbare Stromquelle |
| 60 | elektrisch leitende Schicht |
| 61 | elektrisch leitende Schicht |
| 62 | Durchbrechungen |
| 63 | Parallellenker |
| 64 | beweglicher Parallelschenkel |
| 65 | feststehender Parallelschenkel |
| 70 | beweglicher Parallelschenkel |
| 71, 71 ', 71 " | Parallellenker |
| 72 | feststehender Parallelschenkel |
| 73 | erster Sensor |
| 74 | zweiter Sensor |
| 75 | dritter Sensor |
| 76, 76' | Leitungsteil |
| 77, 77' | Leitungsteil |
| 78, 78' | Leitungsteil |
| 79, 79' | Leitungsteil |
| 80 | Signalumformer |
| 81 | Mess- und/oder Regeleinheit |

## Patentansprüche

1. Elektromagnetisches Kraftkompensations-Direktmesssystem mit einer mehrteiligen Parallelführung und mit einem Lastaufnehmer (8, 41), welcher über ein Kraftübertragungsgestänge (5, 44) mit einer Kraftkompensationsvorrichtung (12, 43) verbunden ist, wobei die Kraftkompensationsvorrichtung (12, 43) mindestens einen Permanentmagneten (9, 9') und eine elektrisch mit einem regelbaren Stromkreis verbundene Spule (11) aufweist, **dadurch gekennzeichnet, dass** mindestens ein Teil der Parallelführung elektrisch in den regelbaren Stromkreis (15, 59) eingebunden ist und zur Übertragung von elektrischen Strömen dient.

2. Direktmesssystem nach Anspruch 1, **dadurch gekennzeichnet, dass** der Teil der Parallelführung zur Übertragung elektrischer Signale ausgestaltet ist.

3. Direktmesssystem nach einem der Ansprüche 1 oder 2, **dadurch gekennzeichnet, dass** das Direktmesssystem weiterhin mindestens einen mit dem Stromkreis oder einem Mess- und/oder Regelkreis verbundenen Sensor aufweist, wobei das Teil der Parallelführung elektrisch und/oder elektronisch in den Mess- und/oder Regelkreis eingebunden ist und zur Übertragung von Mess- und/oder Regelsignalen dient.

4. Direktmesssystem nach Anspruch 3, **dadurch gekennzeichnet, dass** der Sensor als Temperatur-, Wärmefluss-, Druck-, Feuchtigkeits-, Strahlungs- oder Beschleunigungssensor oder zur Messung andere physikalischer oder chemischer Grössen ausgestaltet ist.

5. Direktmesssystem nach einem der Ansprüche 1 bis 4, **dadurch gekennzeichnet, dass** das Teil der Parallelführung (3, 4) vollständig aus einem elektrisch leitenden Material besteht.

6. Direktmesssystem nach einem der Ansprüche 1 bis 4, **dadurch gekennzeichnet, dass** mindestens eine Oberfläche des Teils der Parallelführung (17, 21) zumindest teilweise eine elektrisch leitende Schicht aufweist.

7. Direktmesssystem nach einem der Ansprüche 1 bis 6, **dadurch gekennzeichnet, dass** das Teil der Parallelführung (21) mindestens zwei von einander isolierte elektrische Leiterbahnen aufweist.

8. Direktmesssystem nach einem der Ansprüche 1 bis 7, **dadurch gekennzeichnet, dass** das Teil der Parallelführung ein Parallelschenkel und/oder ein Parallellenker ist.

9. Direktmesssystem nach Anspruch 8, **dadurch gekennzeichnet, dass** mindestens ein feststehender Parallelschenkel (65, 72) und mindestens ein beweglicher Parallelschenkel (64, 70), welche durch mindestens zwei Parallellenker (63,71) miteinander verbunden sind, ein Paralielführungsglied ausbilden.

10. Direktmesssystem nach einem der Ansprüche 1 bis 9, **dadurch gekennzeichnet, dass** das Direktmesssystem einen Lagegeber (27) aufweist, und dass die Parallelführung mindestens ein oberes Parallelführungsglied (3) und mindestens ein unteres Parallelführungsglied (4) aufweist, wobei der Lagegeber (27) im Wesentlichen mittig zwischen dem oberen Parallelführungsglied (3) und dem unteren Parallelführungsglied (4) angeordnet ist.

11. Direktmesssystem nach Anspruch 10, **dadurch gekennzeichnet, dass** das untere Parallelführungsglied (4) und das obere Parallelführungsglied (3) zwischen dem Lastaufnehmer (8) und der Kraftkompensationsvorrichtung (12) angeordnet sind.

12. Direktmesssystem nach einem der Ansprüche 10 oder 11, **dadurch gekennzeichnet, dass** das Direktmesssystem eine Abtastung (26) zur Kontrolle der Position des Lagegebers (27) aufweist.

13. Direktmesssystem nach Anspruch 12, **dadurch gekennzeichnet, dass** die Abtastung (26) im Wesentlichen mittig zwischen dem oberen Parallelführungsglied (3) und dem unteren Parallelführungsglied (4) angeordnet ist.

## Claims

1. An electromagnetic force-compensation direct-measurement system with a multi-part parallel-guiding mechanism and with a load receiver (8, 41), which is connected via a force-transmitting rod (5, 44) with a force-compensation device (12, 43), wherein the force-compensation device (12, 43) has at least one permanent magnet (9, 9') and an electrical coil (11) connected with a controllable electrical circuit, **characterised in that** at least one part of the parallel-guiding mechanismguiding mechanism is electrically integrated into the controllable electrical circuit (15, 59) and serves to transfer electrical currents.

2. The direct measurement system according to Claim 1, **characterised in that** the part of the parallel-guiding mechanism is configured for the transfer of electrical signals.

3. The direct measurement system according to one of the Claims 1 or 2, **characterised in that** the direct measurement system further comprises at least one sensor connected with the electrical circuit, or with a measurement and/or control circuit, wherein the part of the parallel-guiding mechanism is electrically and/or electronically integrated into the measurement and/or control circuit and serves to transfer measurement and/or control signals.

4. The direct measurement system according to Claim 3, **characterised in that** the sensor is configured as a temperature, heat flux, pressure, humidity, radiation or acceleration sensor, or for the measurement of other physical or chemical quantities.

5. The direct measurement system according to one of the Claims 1 to 4, **characterised in that** the part of the parallel-guiding mechanism (3, 4) consists completely of an electrically conducting material.

6. The direct measurement system according to one of the Claims 1 to 4, **characterised in that** at least one surface of the part of the parallel-guiding mechanism (17, 21) comprises at least in part an electrically conducting layer.

7. The direct measurement system according to one of the Claims 1 to 6, **characterised in that** the part of the parallel-guiding mechanism (21) has at least two electrically conducting tracks that are insulated from one another.

8. The direct measurement system according to one of the Claims 1 to 7, **characterised in that** the part of the parallel-guiding mechanism is a parallel leg and/or a parallel link.

9. The direct measurement system according to Claim 8, **characterised in that** at least one fixed parallel leg (65, 72) and at least one moving parallel leg (64, 70), which are connected with one another by means of at least two parallel links (63, 71), form a parallel-guiding member.

10. The direct measurement system according to one of the Claims 1 to 9, **characterised in that** the direct measurement system has a position marker (27), and **in that** the parallel-guiding mechanism has at least one upper parallel-guiding member (3) and at least one lower parallel-guiding member (4), wherein the position sensor (27) is arranged essentially centrally between the upper parallel-guiding member (3) and the lower parallel-guiding member (4).

11. The direct measurement system according to Claim 10, **characterised in that** the lower parallel-guiding member (4) and the upper parallel-guiding member (3) are arranged between the load receiver (8) and the force-compensation device (12).

12. The direct measurement system according to one of the Claims 10 or 11, **characterised in that** the direct measurement system comprises a sensing device (26) for purposes of monitoring the position of the position sensor (27).

13. The direct measurement system according to Claim 12, **characterised in that** the sensing device (26) is arranged essentially centrally between the upper parallel-guiding member (3) and the lower parallel-guiding member (4).

## Revendications

1. Système de mesure directe électromagnétique de compensation de force comprenant un guidage parallèle en plusieurs parties et un récepteur de charge (8, 41), lequel est relié par une tringle de transmission de force (5, 44), un dispositif de compensation de force (12, 43), le dispositif de compensation de force (12, 43) présentant au moins un aimant permanent (9, 9') et une bobine (11) reliée électriquement à un circuit réglable, **caractérisé en ce qu'**au moins une partie du guidage parallèle est intégrée électriquement dans le circuit (15, 59) réglable et sert à la transmission de courants électriques.

2. Système de mesure directe selon la revendication 1, **caractérisé en ce que** la partie du guidage parallèle est conçue pour la transmission de signaux électriques.

3. Système de mesure directe selon l'une quelconque des revendications 1 ou 2, **caractérisé en ce que** le système de mesure directe présente également au moins un capteur relié au circuit ou à un circuit de mesure et/ou circuit régulateur, la partie du guidage parallèle étant intégrée de façon électrique et/ou électronique dans le circuit de mesure et/ou le circuit régulateur et servant à la transmission de signaux de mesure et/ou de signaux de réglage.

4. Système de mesure directe selon la revendication 3, **caractérisé en ce que** le capteur est conçu comme capteur de température, capteur de flux thermique, capteur de pression, capteur d'humidité, capteur de rayonnement ou capteur d'accélération ou pour la mesure d'autres grandeurs physiques ou chimiques.

5. Système de mesure directe selon l'une quelconque des revendications 1 à 4, **caractérisé en ce que** la partie du guidage parallèle (3, 4) est complètement à base d'un matériau électro-conducteur.

6. Système de mesure directe selon l'une quelconque des revendications 1 à 4, **caractérisé en ce qu'**au moins une surface de la partie du guidage parallèle (17, 21) présente au moins en partie une couche électroconductrice.

7. Système de mesure directe selon l'une quelconque des revendications 1 à 6, **caractérisé en ce que** la partie du guidage parallèle (21) présente au moins deux pistes conductrices isolées électriquement l'une de l'autre.

8. Système de mesure directe selon l'une quelconque des revendications 1 à 7, **caractérisé en ce que** la partie du guidage parallèle est une branche parallèle et/ou un bras oscillant parallèle.

9. Système de mesure directe selon la revendication 8, **caractérisé en ce qu'**au moins une branche parallèle (65, 72) fixe et au moins une branche parallèle (64, 70) mobile, lesquelles sont reliées l'une à l'autre par au moins deux bras oscillants parallèles (63, 71), forment un élément de guidage parallèle.

10. Système de mesure directe selon l'une quelconque des revendications 1 à 9, **caractérisé en ce que** le système de mesure directe présente un transmetteur de position (27), et **en ce que** le guidage parallèle présente au moins un élément supérieur de guidage parallèle (3) et au moins un élément inférieur de guidage parallèle (4), le transmetteur de position (27) étant disposé sensiblement au centre entre l'élément supérieur de guidage parallèle (3) et l'élément inférieur de guidage parallèle (4).

11. Système de mesure directe selon la revendication 10, **caractérisé en ce que** l'élément inférieur de guidage parallèle (4) et l'élément supérieur de guidage parallèle (3) sont disposés entre le récepteur de charge (8) et le dispositif de compensation de force (12).

12. Système de mesure directe selon l'une quelconque des revendications 10 ou 11, **caractérisé en ce que** le système de mesure directe présente un balayage (26) pour le contrôle de la position du transmetteur de position (27).

13. Système de mesure directe selon la revendication 12, **caractérisé en ce que** le balayage (26) est disposé sensiblement au centre entre l'élément supérieur de guidage parallèle (3) et l'élément inférieur de guidage parallèle (4).
